# EUROPEAN PATENT SPECIFICATION

(11) **EP 1 789 165 B1**
(45) Date of publication and mention of the grant of the patent: **12.03.2014**
(21) Application number: 05769692.4
(22) Date of filing: 03.08.2005
(51) Int. Cl.: B01D 65/06, B01D 65/02

(54) **PROCESS FOR CLEANING MEMBRANES**
VERFAHREN ZUR REINIGUNG VON MEMBRANEN
PROCESSUS DE NETTOYAGE DES MEMBRANES

(30) Priority: 04.08.2004 AU 2004904430; 06.04.2005 AU 2005901690
(43) Date of publication of application: 30.05.2007
(73) Proprietor: Siemens Water Technologies LLC, Alpharetta, GA 30022 (US)
(72) Inventor: MULLETTE, Daniel, Toongabbie, NSW 2146 (AU); MULLER, Heinz-Joachim, Woy Woy, NSW 2256 (AU)
(74) Representative: Fyfe, Fiona Allison Watson
(86) International application number: PCT/AU2005/001157
(87) International publication number: WO 2006/012691

(56) References cited:
- WO-A1-01/19414
- WO-A1-01/36076
- WO-A1-2005/005028
- WO-A2-00/09245
- US-B1- 6 428 705
- DATABASE WPI Section Ch, Week 198805 Thomson Scientific, London, GB; Class D15, AN 1988-033831 XP002512101 & JP 62 294406 A (JAPAN ORGANO CO LTD) 21 December 1987 (1987-12-21) -& JP 62 294406 A (ORGANO KK) 21 December 1987 (1987-12-21)
- DATABASE WPI Derwent Publications Ltd., London, GB; Class D15, AN 2005-163871, XP008112095 & CN 1 541 757 A (UNIV) 03 November 2004
- DATABASE WPI Derwent Publications Ltd., London, GB; Class D15, AN 2001-331864, XP008112096 & JP 2001 079366 A (ASAHI) 27 March 2001

## Description

### Technical Field

The invention relates to processes for cleaning membranes, in particular to processes using hydroxyl radicals in the cleaning of polymeric microfiltration and ultrafiltration membranes.

### Background Art

Polymeric microfiltration and ultrafiltration membranes have found widespread use in the filtration of water. The porous microfiltration and ultrafiltration membranes commonly in use are typically in the form of hollow fibres, which are potted into bundles. The bundles are then set into modules, which can further be arranged into banks of modules. In this way, membrane surface area is maximised for a given volume, and large water throughputs can be achieved by apparatus having a relatively small "footprint".

In some modes of operation, contaminated feedwater is introduced into the modules in such a way as to be allowed to contact only the outside of the hollow fibres. The contaminated feed water may be pressurised if necessary to achieve passage of water across the membrane. When the water passes through the hollow fibre polymeric membranes, it accumulates inside the lumen of the fibre, from where it can thus be drawn off and used. The contaminants remain on the outside of the hollow fibres.

As these contaminant materials build up on the filter they reduce the overall permeability of the membrane. Thus, the volume of water that passes through the membrane at a given pressure is reduced, or alternatively, the amount of pressure needed to sustain a given membrane throughput is increased. In either case, the situation is undesirable, as the membrane will soon cease producing clean water altogether, or will need to operate at pressures which risk destroying the integrity of the membrane. For this reason the membranes need to be cleaned.

A large amount of the contaminants can be removed from the hollow fibre by periodic backwashing, i.e. forcing a gas or filtrate through the inside lumen of the hollow fibre membrane in a direction contra to the flow of the water such that the gas pushes contaminants from the membrane pores, into the surrounding water which can be drawn off and sent, for example, to a settling pond or tank. Membranes can likewise be cleaned by other forms of mechanical agitation if desired.

However, these mechanical and gas backwashing methods are not completely effective and over time their efficacy gradually decreases as the membranes become fouled by material which is not so readily removed by these means. Because of the nature of the material being filtered, which is often surface water, ground water purposes, membrane bioreactors and the like, much of the fouling agents are biological and/or organic in nature. Accordingly, additional cleaning steps are required.

Polymeric microfiltration and ultrafiltration membranes fouled with biological or organic matter have typically been cleaned by the use of oxidative cleaning agents such as sodium hypochlorite (chlorine), hydrogen peroxide and to a lesser extent ozone. Chlorine is the most widely used cleaning agent however it is undesirable for widespread use as a water treatment chemical. Chlorine dosing in water treatment systems is a known cause of carcinogenic chlorinated organic by products. These are hazardous and can create environmental disposal problems. Chlorine gas itself, as well as having an unpleasant odour, is also a health hazard to those in the area.

The use of hydrogen peroxide can avoid issues related to hazardous and environmentally unsound chlorinated by-products, but is less efficient as a cleaning chemical when compared to chlorine.

Ozone is a more effective cleaning agent than chlorine or hydrogen peroxide, and also avoids many of the safety/environmental issues surrounding the use of chlorine. However membranes such as PVdF that resist oxidation by chlorine or peroxide are susceptible to degradation by ozone, as it is the more powerful oxidant.

Ozone and chlorine also suffer from the disadvantage that they can be involved in reaction pathways which result in the production of substances like trihalomethanes.

WO00/09245 describes the cleaning of a membrane by use of peroxocarbonate under basic conditions.

WO01/36076 describes a filter media, preferably a pleated filter membrane, using peracetic acid as a cleaning agent.

WO01/19414 describes a composition designed to both clean and disinfect a dialyser. In an example, hydrogen peroxide and peracetic acid are mixed with a buffer prior to use.

WO 2005 005028 desceibes a formulation including peracetic acid, hydrogen peroxide, acids and water. This formulation may be continuously dosed to the influx of a nanofiltration membrane along with methyl ethyl ketone peroxide to attempt to prevent fouling.

US 6428705 describes hydrogen peroxide, ozone and UV light used alone or in combination doe pre-treatments in dye destruction.

**It is the object of the present invention to overcome or ameliorate at least one of the above mentioned disadvantages of the prior art.**

The present invention accordingly provides methods as defined in the appended claims.

Hydroxyl radicals are powerful oxidising agents, and thus represent a powerful method for removing fouling from membranes used in filtration, particularly in water filtration where large amounts of biological and/or organic fouling are found.

It has been found that a number of polymeric membranes, including PVdF, have a good resistance to hydroxyl radicals. This is surprising because polymeric membranes such as PVdF are not very stable with ozone even though hydroxyl radicals are considered more powerful oxidising agents than ozone for cleaning organics from fouled membranes. without wishing to be bound by theory, it is possible that the reason for this may be due to the short lifetime of hydroxyl radicals.

In one preferred embodiment, the solution of hydroxyl radicals is prepared from an aqueous solution of M⁽ⁿ⁺⁾ and M⁽ⁿ⁺¹⁾⁺ (for example, an iron II and iron III system) in conjunction with hydrogen peroxide at a low pH. Either M⁽ⁿ⁺⁾ and/or M⁽ⁿ⁺¹⁾⁺ will reach an appropriate equilibrium between the two species. For instance, it is possible to start with either ferrous or ferric species, to get an identical catalyst system. Other practicalities may dictate one over the other, for instance, when the metal is iron, preferably iron II species are used to start the reaction because they tend to be more soluble than any corresponding iron III species. Thus, the possibility of undissolved iron III salts is reduced when starting from a solution of iron II.

The invention will be described with respect to iron II and iron III, but it will be understood to apply to any system where hydroxyl radicals are generated.

The general scheme for preparing hydroxyl radicals by the redox catalyst/peroxide/H⁺ system of the present invention is as shown below. The reaction of either iron II or iron III with hydrogen peroxide is possible, generating the complementary iron species. Overall, it can be seen that the system is catalytic with respect to iron, and also that conservation of pH would be expected if there were no other influences on the reaction. However when used to clean membranes, the pH would be expected to decrease during the course of the reaction due to organic acids formed as organic foulants are decomposed.

Fe²⁺ + H₂O₂ Fe³⁺ + OH⁻ +HO⁻

Fe³⁺ + H₂O₂ Fe²⁺ + ^{·}OOH + H⁺

Overall:

2 H₂O₂ H₂O + HO^{·} + ^{·}OOH

The hydroxyl radical is a strong oxidant, having a relative oxidation power over two times greater than chlorine, and being second only to F⁻ in oxidative strength. It has been used to destroy organic pollutants, reduce toxicity and to control odours and colours in water.

The contacting of the membrane with hydroxyl radicals may occur alone or in combination with any other cleaning solution or method. A variety of methods are possible.

For example, the membrane may be soaked with the hydroxyl radical solution or have the hydroxyl radical solution filtered or recirculated through the membrane. The cleaning process may involve an aeration step, or a step of irradiating the solution with ultraviolet light to assist in cleaning.

Further, the cleaning solution once used may be recovered. The iron II/iron III system is catalytic and may be used to restart the cleaning process by the application of fresh amounts of hydrogen peroxide and an appropriate pH adjustment if required.

The redox catalyst/peroxide/H⁺ reagent may be utilised in a variety of ways. The individual redox catalyst/peroxide/H⁺ reagent components may be added together, or preferably separately, directly to the water which surrounds the fibre membranes. Alternatively, for example, when the redox catalyst/peroxide/H⁺ system uses iron II/iron III catalyst, the source of iron ions may be from the feed water to be filtered. Depending upon the iron concentration required for cleaning efficiency it may not be necessary to supplement the natural iron source by dosing with additional iron II or iron III. This may be applicable for example, in certain industrial processes or in mining processes. Iron ions may be added in to the feed water specifically to increase iron concentration in order that the reaction efficiency might be enhanced.

Alternatively, the approach of the present invention may be used to take advantage of existing iron species which are present in the filtration water. Ferric chloride (iron III) is commonly used as a flocculating agent to settle residual material prior to filtration, so that a clarified feed water can be passed through a filter. Ferric chloride may also be used to remove phosphorous during or after the filtration step. Thus, iron catalysts present in the water either from pre-treatment or for post treatment may be used to generate the redox catalyst/peroxide/H⁺ system of the present invention.

To expand on one example, iron II or iron III can be added in the feed water at an appropriate concentration to clarify water. After sedimentation, the clarified water is drawn off, containing iron II and/or iron III. This then introduced to a membrane, the pH is reduced to about pH4 and peroxide is added. Alternatively, the pH can be reduced and peroxide added prior to introduction to a membrane. The redox catalyst/peroxide/H⁺ system of the present invention may be passed through the membrane just once, or allowed to contact the membrane by standing for a time, or recirculated through the membrane or membrane system. The contact time is selected such that either a predetermined level of cleaning is achieved, as demonstrated by pressure drop, or a predetermined level of hydroxyl radicals is reached, below which the rate of cleaning is no longer practicable. If necessary, the iron II/ iron III system remaining after the hydroxyl radicals is consumed may be re used by pH correction to about pH4 (if necessary) and reintroduction of further hydrogen peroxide.

Once used the catalyst iron may be recovered from the cleaning solution. Recovery can be effected either by recovering the entire cleaning solution for re-use or by flocculating the iron by raising the pH of the cleaning solution and then separating out the iron flocculants. In certain cases it may be necessary to aerate a solution of aqueous Fe II ions to oxidise the entire solution to Fe III. This would improve the efficiency of the Iron recovery step to above 90%.

Alternatively, Fe II/III system which has been used as a catalyst for the cleaning solution may be reused in the water filtration process in other ways, e.g. as a flocculent in the filtration process to improve the quality of the feed to the membranes, to improve or enhance the filtration performance and to improve and enhance the quality of the filtrate. These improvements may come from physical separation, such as flocculation, or by the chemical reaction with other dissolved species, such as phosphates. For example, iron may be used as a catalyst in the redox catalyst/peroxide/H⁺ system of the present invention following which the peroxide depleted cleaning solution may be used as a source of iron to flocculate either the feed or the filtrate. This may be done with or without further treatment of the peroxide depleted cleaning solution. In one example, fresh feed water is added to spent cleaning system containing FeII/III. The pH rises (or is neutralised) and the iron flocculates and clarifies the feed water prior to filtration.

Because the entire CIP solution of the present invention can be recycled, reduced waste is certainly a factor.

The invention may be applied to the filtration of surface water treatment, ground water treatment, desalination, treatment of secondary or tertiary effluent and membrane bioreactors.

Hydroxyl radical based cleaning systems, such as those based on the redox catalyst/peroxide/H⁺ system of the present invention can be used in existing systems and treatment process to improve quality of feed, filtrate or the performance of the filtration process itself. As such, they may be done in a batch process, or in a continuous process, for instance, where the Iron concentration immediately upstream of or at the membrane is measured, pH is adjusted and peroxide dosed in as appropriate to generate a predetermined concentration of hydroxyl radicals at the membrane.

The cleaning methods are particularly suitable for cleaning in place (CIP) applications. Microfiltration and ultrafiltration membranes treated with the redox catalyst/peroxide/H⁺ system of the present invention show improved recovery from fouling of membranes used for water filtration.

An additional advantage provided by the methods of the present invention provide a self recirculating system in cases where vertical hollow fibre membranes are used. Most applications involve the use of hollow fibre membranes in a vertical orientation. Recirculation through the membrane improves the extent of the clean and is usually done by pumping cleaning solution through. In the present invention, in hollow fibre modules treated with the redox catalyst/peroxide/H⁺ system of the present invention, the solution flows through the membranes and out the top of the lumens which are typically 10cm above water level. This is because the oxygen bubbles form in the lumens and displace water. This continuous displacement from evolving oxygen and the rising bubbles creates a flow that continues to draw more liquid in through the membrane wall and push water out of the top of the lumen. The rate of spontaneous flow expected from oxygen generation is in the range 0.01 - 50 lmh, with values about approx 0.2litres/m2.hr (lmh) in the most preferred concentration ranges for cleaning as discussed below.

Further, the nature of the reaction means that oxygen bubbles are evolved during the course of the reaction. This is particularly advantageous for cleaning membranes because it means the solutions are self agitating and continually refreshing the cleaning solution. The evolution of gas means that it breaks up the filter cake on the membrane surface. The evolution of oxygen is believed to synergistically enhance the cleaning process of the present invention.

The clean provided by the redox catalyst/peroxide/H⁺ system of the present invention has, in practice, proven to be low-foaming. In membrane bioreactors, where biological processes are involved, the micro organisms can become unsettled, leading to significant foaming. However, with the redox catalyst/peroxide/H⁺ system of the present invention, CIP involved no significant foaming. Without wishing to be bound by theory, it is believed that this is due to the fact that the disruption to micro organisms is not as drastic as in other cleans, and the micro organisms consequently do not take so long to settle back down.

Regardless of the type of cleaning situation, for example, reusing iron flocculating agents, allowing membranes stand in the redox catalyst/peroxide/H⁺ system of the present invention, making a single pass of the redox catalyst/peroxide/H⁺ system of the present invention through a membrane or recycling the redox catalyst/peroxide/H⁺ system of the present invention through a membrane, the concentration of Fe(II) or Fe(III) used will have the same broad requirements, and are best specified in terms of the overall amounts of reagents required.

Depending upon the source of the waste water and the other components present therein, chlorine and ozone can produce unwanted compounds, such as trihalomethanes. The cleaning methods of the present invention do not facilitate the production of trihalomethanes and the like. To the contrary, the cleaning methods of the present invention actually destroy, where present, trihalomethanes and the like.

Typically, a concentration less than 300ppm of Fe can be used. Concentrations as low as 15-20ppm Fe are efficacious, but the reaction time required is longer, for example, in excess of 24hrs. Preferred concentrations are between 50-5000ppm FeSO₄, and more preferably 300-1200ppm. Contact times vary with the type of feed being filtered. Typical cleans are from 0.5-24 hrs but more preferably 2-4hrs.

Peroxide concentrations are preferably between 100-20000 ppm, more preferably between 400 ppm and 10000ppm and even more preferably between 1000-5000ppm.

It is also preferable to have the ratio of Fe:H₂O₂ between 1:4 and 1:7.5, and more preferably between 1:5-1:25.

Preferably pH is in the range 2-6, more preferably 3-5. Lower pH's can be used if it is desired to have a 'dual' organic/inorganic clean. A dual clean is required in some CIP regimes. This involves both an acid clean (which may be an inorganic acid or, more usually an organic acid such as citric acid) to remove inorganic foulants and a chlorine clean to remove organic foulants. The use of the redox catalyst/peroxide/H⁺ system of the present invention has the advantage of providing both an acid and an oxidative clean in a single process.

A typical the redox catalyst/peroxide/H⁺ system of the present invention had a concentration of 0.12wt% FeSO4 at pH2, and a peroxide concentration of between 5000ppm and 9000ppm.

The rate of addition of H₂O₂ is such that it is sufficient to add the equivalent amount of H₂O₂ over the time of the clean. For example, in the case of a 4000ppm H₂O₂ concentration for a duration of 4 hours, H₂O₂ would be dosed at approximately 1000ppm per hour.

Sodium hydrogen sulphate (NaHSO₄) can be used to control the pH. Sulfuric acid can be used, buffered with NaOH to get the desired pH. Chloride ions can be present, e.g. in the form of FeCl₃ of HCl. When the pH is lowered some HCl could be generated, which is a gas.

Any acid can be used, provided that the pH is in the right range. Preferably the system is a Sulfuric/Caustic combination or sulfuric/sodium hydrogen sulphate combination. Citric acid is also preferred as a pH control agent.

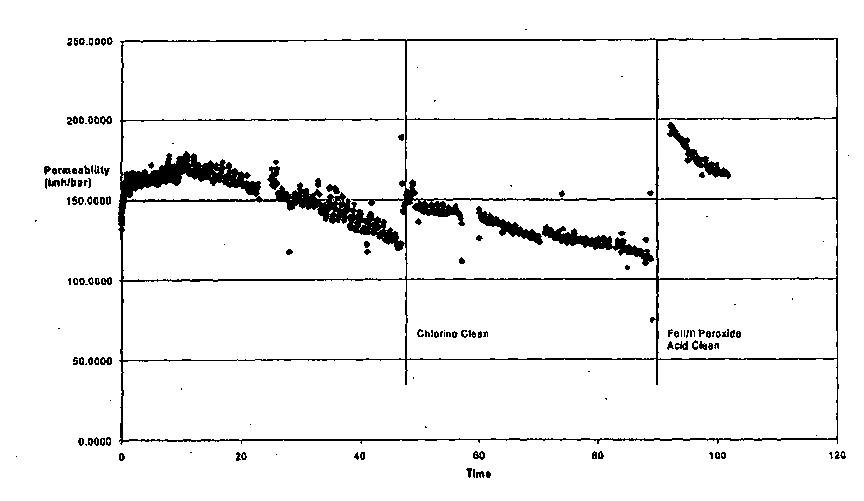

Figure 1 shows the comparison of Chlorine clean and a clean provided by the redox catalyst/peroxide/H⁺ system of the present invention. Figure 1 shows a cleaning in place (CIP) and illustrates the relative advantage over chlorine cleans which can be obtained from the redox catalyst/peroxide/H⁺ system of the present invention. The specific cleaning procedure for the two cleans performed is as follows:

Chlorine Clean:
1. 500ppm chlorine rinse for 30 minutes
2. Liquid backwash for 2 minutes
3. 1500ppm chlorine soak with intermittent aeration (30 sec every 10 minutes at 8m3/hr) for 3 hours
4. Liquid backwash for 2 minutes
5. Drain down and restart

Clean provided by the redox catalyst/peroxide/H⁺ system of the present invention:
1. Rinse with tap water with intermittent aeration (8m3/hr every 10 seconds, 300 seconds) for 15 minutes.
2. Fill filtrate tank with tap water and 8L of H₂SO₄ & FeSO₄ solution (0.1% H₂SO₄ and 0.12% FeSO₄), 5.6L of Peroxide (∼0.5%), pH=2.60.
3. Peroxide added to filtrate tank slowly with constant stirring.
4. Membrane tank filled and soak for 4 hours, with no aeration.
5. Drained down and restarted unit.

A used membrane was cleaned and allowed to filter a typical waste water feed. Starting permeability was around 150 lmh/bar. The permeability of the membrane began to drop in use as expected and eventually fell below initial levels to about 120 lmh/bar before the chlorine clean was commenced. The chlorine clean restored permeability to initial levels, but again dropped to about 120 lmh/bar in use as expected. At this point, a clean in accordance with the present invention was applied. The membrane permeability was restored to a point significantly better than at the start of the process, around 200 lmh/bar - almost an "as new" figure. The method of the present invention thus provided a significantly better clean than chlorine, with none of the attendant health or waste disposal issues.

## Claims

1. A method for cleaning an oxidation resistant microfiltration or ultrafiltration membrane comprising the step of
- contacting said membrane with a hydroxyl radical,
**characterised in that** the hydroxyl radicals are generated from an aqueous solution of transition metal (M) ions, in conjunction with hydrogen peroxide under acidic conditions, wherein the radical-forming components are added separately directly to water which surrounds the microfiltration or ultrafiltration membrane, and wherein a ratio of transition metal: hydrogen peroxide is between 1:4 and 1:7.5.

2. A method according to claim 1 wherein the microfiltration or ultrafiltration membrane is cleaned of biological fouling and/or organic fouling.

3. A method according to claim 1 wherein the microfiltration or ultrafiltration membrane is made from polyvinylidene fluoride (PVdF), copolymers of chlorotrifluoroethylene with ethylene, copolymers of chlorotrifluoroethylene with ethylene and one or more other monomers, or polysulfones.

4. A method according to any one of claims 1 to 3 wherein the hydroxyl radicals are generated from an aqueous solution of transition metal (M) ions present as a complex with a chelating agent, in conjunction with hydrogen peroxide under acidic conditions.

5. A method according to any preceding claim wherein the acidic conditions are a pH of between about pH 2-6.

6. A method according to any preceding claim wherein the transition metal is iron.

7. A method according to any one of the preceding claims wherein the microfiltration or ultrafiltration membrane is soaked with a solution containing hydroxyl radicals.

8. A method according to any one of the preceding claims wherein a solution containing hydroxyl radicals is filtered or recirculated through the membrane.

9. A method according to claim 7 or 8 further including an aeration step.

10. A method according to any preceding claim wherein iron II or iron III are added to microfiltration or ultrafiltration membrane feed water, the water is allowed to stand and sediment, whereupon after sedimentation, clarified water containing iron II and/or iron III is drawn off, introduced to a microfiltration or ultrafiltration membrane, the pH is reduced to about pH4 and peroxide is added, whereupon membrane cleaning occurs.

11. A method according to any preceding claims wherein iron II or iron III are added to microfiltration or ultrafiltration membrane feed water at an appropriate concentration to clarify water, the water is allowed to stand and sediment, whereupon after sedimentation, the clarified water containing iron II and/or iron III is drawn off, the pH is reduced to about pH4 and peroxide is added, and the resultant solution is introduced to a microfiltration or ultrafiltration membrane, whereupon membrane cleaning occurs.

12. A method according to any preceding claim wherein an acidified iron II or iron III solution in combination with peroxide is used to clean a membrane, and subsequent to cleaning the membrane, a spent cleaning solution containing iron II or iron III is added to fresh feed water.

13. A method according to any preceding claim wherein an acidified iron II or iron III solution in combination with peroxide is used to clean a membrane, and subsequent to cleaning the membrane, a spent cleaning solution containing iron II or iron III is used to remove phosphorus.

14. A method according to any preceding claim wherein an acidified iron II or iron III solution in combination with peroxide is used to clean a membrane, and subsequent to cleaning the membrane, a spent cleaning solution containing iron II or iron III is used as a flocculent

15. A method according to any one of the preceding claims wherein contact time between the microfiltration or ultrafiltration membrane and the hydroxyl radical is selected such that a predetermined level of cleaning is achieved.

16. A method according to claim 15 wherein a predetermined level of cleaning is demonstrated by a predetermined transmembrane pressure drop.

17. A method according to claim 15 wherein a predetermined level of cleaning is demonstrated by a predetermined hydroxyl radical concentration.

18. A method according to any preceding claims conducted in a batch wise process.

19. A method according to any preceding claim conducted in a continuous process.

20. A method according to any one of the preceding claims wherein the microfiltration or ultrafiltration membranes used are hollow fibre membranes.

21. A method according to claim 20 wherein oxygen bubbles formed in the course of the reaction create a flow that draws more liquid in through a wall of a vertical hollow fibre membrane and pushes water out of the top of the lumen.

22. A method according to any one of the preceding claims wherein oxygen bubbles act to self agitating a solution containing the hydroxyl radicals and/or break up a filter cake, where present, on the microfiltration or ultrafiltration membrane surface.

23. A method according to any one of the preceding claims used in a membrane bioreactor.

24. A method according to any one of the preceding claims which destroys, where present, trihalomethanes.

25. A method according to any preceding claim wherein concentrations of 15 - 5000ppm transition metal ion are used.

26. A method according to claim 24 wherein concentrations of 300 - 1200ppm transition metal ion are used.

27. A method according to any one of the preceding claims wherein the contact time between the micro filtration or ultrafiltration membrane and the hydroxyl radical is between 0.5 - 24 hrs.

28. A method according to claim 27 wherein the contact time between the microfiltration or ultrafiltration membrane and the hydroxyl radical is between 2 - 4hrs.

29. A method according to any preceding claim wherein the transition metal/peroxidesystem has a starting concentration of 0.12wt% FeSO4 at pH2 and a peroxide concentration of between 5000ppm and 9000ppm.

30. A method according to any one of the preceding claims wherein sodium hydrogen sulphate is used to control pH.

31. A method according to any one of claims 1 to 29 wherein citric acid is used to control pH.

32. A method according to any one of claims 1 to 29 wherein pH is controlled by sulfuric acid buffered with NaOH.

## Patentansprüche

1. Verfahren zur Reinigung einer oxidationsbeständigen Mikrofiltrations- oder Ultrafiltrationsmembran, welches den folgenden Schritt umfasst:
- Inkontaktbringen der Membran mit einem Hydroxylradikal, **dadurch gekennzeichnet, dass** die Hydroxylradikale aus einer wässrigen Lösung von Übergangsmetall- (M-) Ionen in Verbindung mit Wasserstoffperoxid unter sauren Bedingungen erzeugt werden, wobei die radikalbildenden Komponenten separat direkt Wasser zugegeben werden, welches die Mikrofiltrations- oder Ultrafiltrationsmembran umgibt, und wobei ein Verhältnis von Übergangsmetall : Wasserstoffperoxid zwischen 1:4 und 1:7,5 beträgt.

2. Verfahren nach Anspruch 1, wobei die Mikrofiltrations- oder Ultrafiltrationsmembran von biologischen Verschmutzungen und/oder organischen Verschmutzungen gereinigt wird.

3. Verfahren nach Anspruch 1, wobei die Mikrofiltrations- oder Ultrafiltrationsmembran aus Polyvinylidenfluorid (PVdF), Copolymeren von Chlortrifluorethylen mit Ethylen, Copolymeren von Chlortrifluorethylen mit Ethylen und einem oder mehreren anderen Monomeren oder Polysulfonen hergestellt ist.

4. Verfahren nach einem der Ansprüche 1 bis 3, wobei die Hydroxylradikale aus einer wässrigen Lösung von Übergangsmetall- (M-) Ionen, die als ein Komplex mit einem Chelatbildner vorliegen, in Verbindung mit Wasserstoffperoxid unter sauren Bedingungen erzeugt werden.

5. Verfahren nach einem der vorhergehenden Ansprüche, wobei die sauren Bedingungen ein pH-Wert von etwa pH 2 bis 6 sind.

6. Verfahren nach einem der vorhergehenden Ansprüche, wobei das Übergangsmetall Eisen ist.

7. Verfahren nach einem der vorhergehenden Ansprüche, wobei die Mikrofiltrations- oder Ultrafiltrationsmembran mit einer Lösung getränkt ist, die Hydroxylradikale enthält.

8. Verfahren nach einem der vorhergehenden Ansprüche, wobei eine Lösung, die Hydroxylradikale enthält, durch die Membran gefiltert oder zurückgeführt wird.

9. Verfahren nach Anspruch 7 oder 8, welches ferner einen Belüftungsschritt beinhaltet.

10. Verfahren nach einem der vorhergehenden Ansprüche, wobei Eisen II oder Eisen III zu Mikrofiltrations- oder Ultrafiltrationsmembran-Speisewasser zugegeben wird, das Wasser stehen und sedimentieren gelassen wird, woraufhin nach der Sedimentation geklärtes Wasser, das Eisen II und/oder Eisen III enthält, abgezogen wird, einer Mikrofiltrations- oder Ultrafiltrationsmembran zugeführt wird, der pH-Wert auf etwa pH 4 verringert wird und Peroxid zugegeben wird, wonach die Membranreinigung stattfindet.

11. Verfahren nach einem der vorhergehenden Ansprüche, wobei Eisen II oder Eisen III zu Mikrofiltrations- oder Ultrafiltrationsmembran-Speisewasser mit einer geeigneten Konzentration zugegeben wird, um Wasser zu klären, das Wasser stehen und sedimentieren gelassen wird, woraufhin nach der Sedimentation das geklärte Wasser, das Eisen II und/oder Eisen III enthält, abgezogen wird, der pH-Wert auf etwa pH 4 verringert wird und Peroxid zugegeben wird und die resultierende Lösung einer Mikrofiltrations- oder Ultrafiltrationsmembran zugeführt wird, wonach die Membranreinigung stattfindet.

12. Verfahren nach einem der vorhergehenden Ansprüche, wobei eine angesäuerte Eisen-II- oder Eisen-III-Lösung in Kombination mit Peroxid verwendet wird, um eine Membran zu reinigen, und im Anschluss an die Reinigung der Membran eine verbrauchte Reinigungslösung, die Eisen II oder Eisen III enthält, zu frischem Speisewasser zugegeben wird.

13. Verfahren nach einem der vorhergehenden Ansprüche, wobei eine angesäuerte Eisen-II- oder Eisen-III-Lösung in Kombination mit Peroxid verwendet wird, um eine Membran zu reinigen, und im Anschluss an die Reinigung der Membran eine verbrauchte Reinigungslösung, die Eisen II oder Eisen III enthält, verwendet wird, um Phosphor zu entfernen.

14. Verfahren nach einem der vorhergehenden Ansprüche, wobei eine angesäuerte Eisen-II- oder Eisen-III-Lösung in Kombination mit Peroxid verwendet wird, um eine Membran zu reinigen, und im Anschluss an die Reinigung der Membran eine verbrauchte Reinigungslösung, die Eisen II oder Eisen III enthält, als ein Flockungsmittel verwendet wird.

15. Verfahren nach einem der vorhergehenden Ansprüche, wobei die Kontaktzeit zwischen der Mikrofiltrations- oder Ultrafiltrationsmembran und dem Hydroxylradikal so gewählt ist, dass ein vorgegebener Reinigungsgrad erreicht wird.

16. Verfahren nach Anspruch 15, wobei ein vorgegebener Reinigungsgrad durch einen vorgegebenen Druckabfall über der Membran nachgewiesen wird.

17. Verfahren nach Anspruch 15, wobei ein vorgegebener Reinigungsgrad durch eine vorgegebene Hydroxylradikalkonzentration nachgewiesen wird.

18. Verfahren nach einem der vorhergehenden Ansprüche, das in einem Chargenprozess durchgeführt wird.

19. Verfahren nach einem der vorhergehenden Ansprüche, das in einem kontinuierlichen Prozess durchgeführt wird.

20. Verfahren nach einem der vorhergehenden Ansprüche, wobei die verwendeten Mikrofiltrations- oder Ultrafiltrationsmembranen Hohlfasermembranen sind.

21. Verfahren nach Anspruch 20, wobei Sauerstoffblasen, die sich im Verlaufe der Reaktion gebildet haben, eine Strömung erzeugen, welche mehr Flüssigkeit durch eine Wand einer vertikalen Hohlfasermembran hindurch einsaugt und Wasser aus der Oberseite des Lumens hinausdrückt.

22. Verfahren nach einem der vorhergehenden Ansprüche, wobei Sauerstoffblasen eine Selbstdurchmischung einer Lösung bewirken, welche die Hydroxylradikale enthält, und/oder einen Filterkuchen, sofern vorhanden, auf der Oberfläche der Mikrofiltrations- oder Ultrafiltrationsmembran aufbrechen.

23. Verfahren nach einem der vorhergehenden Ansprüche, welches in einem Membranbioreaktor angewendet wird.

24. Verfahren nach einem der vorhergehenden Ansprüche, welches Trihalomethane, sofern vorhanden, zerstört.

25. Verfahren nach einem der vorhergehenden Ansprüche, wobei Konzentrationen an Übergangsmetallionen von 15 - 5.000 ppm verwendet werden.

26. Verfahren nach Anspruch 24, wobei Konzentrationen an Übergangsmetallionen von 300 - 1.200 ppm verwendet werden.

27. Verfahren nach einem der vorhergehenden Ansprüche, wobei die Kontaktzeit zwischen der Mikrofiltrations- oder Ultrafiltrationsmembran und dem Hydroxylradikal zwischen 0,5 und 24 Std. beträgt.

28. Verfahren nach Anspruch 27, wobei die Kontaktzeit zwischen der Mikrofiltrations- oder Ultrafiltrationsmembran und dem Hydroxylradikal zwischen 2 und 4 Std. beträgt.

29. Verfahren nach einem der vorhergehenden Ansprüche, wobei das System Übergangsmetall/Peroxid eine Anfangskonzentration von 0,12 Gew.-% FeSO₄ bei pH 2 und eine Peroxidkonzentration zwischen 5.000 ppm und 9.000 ppm aufweist.

30. Verfahren nach einem der vorhergehenden Ansprüche, wobei Natriumhydrogensulfat verwendet wird, um den pH-Wert zu steuern.

31. Verfahren nach einem der Ansprüche 1 bis 29, wobei Citronensäure verwendet wird, um den pH-Wert zu steuern.

32. Verfahren nach einem der Ansprüche 1 bis 29, wobei der pH-Wert durch mit NaOH gepufferte Schwefelsäure gesteuert wird.

## Revendications

1. Procédé de nettoyage d'une membrane de microfiltration ou d'ultrafiltration résistant à l'oxydation comprenant l'étape consistant :
- à mettre en contact ladite membrane avec un radical hydroxyle,
**caractérisé en ce que** les radicaux hydroxyles sont produits à partir d'une solution aqueuse d'ions de métaux de transition (M), en conjugaison avec du peroxyde d'hydrogène dans des conditions acides, les composants radicalogènes étant ajoutés séparément directement à l'eau qui entoure la membrane de microfiltration ou d'ultrafiltration, et un rapport métal de transition:peroxyde d'hydrogène se situant entre 1:4 et 1:7,5.

2. Procédé selon la revendication 1 dans lequel la membrane de microfiltration ou d'ultrafiltration est nettoyée de salissures biologiques et/ou de salissures organiques.

3. Procédé selon la revendication 1 dans lequel la membrane de microfiltration ou d'ultrafiltration est faite en fluorure de polyvinylidène (PVDF), en copolymères de chlorotrifluoroéthylène avec de l'éthylène, en copolymères de chlorotrifluoroéthylène avec de l'éthylène et un ou plusieurs autres monomères, ou en polysulfones.

4. Procédé selon l'une quelconque des revendications 1 à 3 dans lequel les radicaux hydroxyles sont produits à partir d'une solution aqueuse d'ions de métal de transition (M) présents sous la forme de complexe avec un agent chélatant, en conjugaison avec du peroxyde d'hydrogène dans des conditions acides.

5. Procédé selon l'une quelconque des revendications précédentes dans lequel les conditions acides consistent en un pH compris entre environ pH 2 et pH 6.

6. Procédé selon l'une quelconque des revendications précédentes dans lequel le métal de transition est le fer.

7. Procédé selon l'une quelconque des revendications précédentes dans lequel la membrane de microfiltration ou d'ultrafiltration est imprégnée d'une solution contenant des radicaux hydroxyles.

8. Procédé selon l'une quelconque des revendications précédentes dans lequel une solution contenant des radicaux hydroxyles est filtrée ou recirculée à travers la membrane.

9. Procédé selon la revendication 7 ou 8 comprenant par ailleurs une étape d'aération.

10. Procédé selon l'une quelconque des revendications précédentes dans lequel on ajoute du fer II ou du fer III à l'eau d'alimentation de la membrane de microfiltration ou d'ultrafiltration, on laisse l'eau reposer et sédimenter, puis, après la sédimentation, on soutire l'eau clarifiée contenant du fer II et/ou du fer III, on l'amène à une membrane de microfiltration ou d'ultrafiltration, on abaisse le pH à environ pH 4 et on ajoute du peroxyde, puis, le nettoyage de la membrane a lieu.

11. Procédé selon l'une quelconque des revendications précédentes dans lequel on ajoute du fer II ou du fer III à l'eau d'alimentation de la membrane de microfiltration ou d'ultrafiltration à une concentration appropriée pour clarifier l'eau, on laisse l'eau reposer et sédimenter, puis, après la sédimentation, on soutire l'eau clarifiée contenant du fer II et/ou du fer III, on abaisse le pH à environ pH 4 et on ajoute du peroxyde, et la solution résultante est amenée à une membrane de microfiltration ou d'ultrafiltration, puis, le nettoyage de la membrane a lieu.

12. Procédé selon l'une quelconque des revendications précédentes dans lequel on utilise une solution acidifiée de fer II ou de fer III en combinaison avec du peroxyde pour nettoyer une membrane, et après avoir nettoyé la membrane, on ajoute une solution de nettoyage usée contenant du fer II ou du fer III à de l'eau d'alimentation fraîche.

13. Procédé selon l'une quelconque des revendications précédentes dans lequel on utilise une solution acidifiée de fer II ou de fer III en combinaison avec du peroxyde pour nettoyer une membrane, et après avoir nettoyé la membrane, on utilise une solution de nettoyage usée contenant du fer II ou du fer III pour éliminer le phosphore.

14. Procédé selon l'une quelconque des revendications précédentes dans lequel on utilise une solution acidifiée de fer II ou de fer III en combinaison avec du peroxyde pour nettoyer une membrane, et après avoir nettoyé la membrane, on utilise une solution de nettoyage usée contenant du fer II ou du fer III comme floculant.

15. Procédé selon l'une quelconque des revendications précédentes dans lequel le temps de contact entre la membrane de microfiltration ou d'ultrafiltration et le radical hydroxyle est sélectionné de telle sorte qu'un niveau prédéterminé de nettoyage soit atteint.

16. Procédé selon la revendication 15 dans lequel un niveau prédéterminé de nettoyage est démontré par une baisse prédéterminée de la pression transmembranaire.

17. Procédé selon la revendication 15 dans lequel un niveau prédéterminé de nettoyage est démontré par une concentration prédéterminée en radicaux hydroxyle.

18. Procédé selon l'une quelconque des revendications précédentes mis en oeuvre dans un processus discontinu.

19. Procédé selon l'une quelconque des revendications précédentes mis en oeuvre dans un processus continu.

20. Procédé selon l'une quelconque des revendications précédentes dans lequel les membranes de microfiltration ou d'ultrafiltration utilisées sont des membranes à fibres creuses.

21. Procédé selon la revendication 20 dans lequel les bulles d'oxygène formées au cours de la réaction créent un flux qui entraîne davantage de liquide à travers une paroi d'une membrane verticale à fibres creuses et chasse l'eau hors du sommet de la lumière.

22. Procédé selon l'une quelconque des revendications précédentes dans lequel les bulles d'oxygène agissant en auto-agitant une solution contenant les radicaux hydroxyles et/ou disloquent un gâteau de filtration, s'il y en a un, sur la surface de la membrane de microfiltration ou d'ultrafiltration.

23. Procédé selon l'une quelconque des revendications précédentes utilisé dans un bioréacteur à membrane.

24. Procédé selon l'une quelconque des revendications précédentes qui détruit, s'il y en a, les trihalométhanes.

25. Procédé selon l'une quelconque des revendications précédentes dans lequel on utilise des concentrations de 15-5.000 ppm d'ions de métal de transition.

26. Procédé selon la revendication 24 dans lequel on utilise des concentrations de 300-1.200 ppm d'ions de métal de transition.

27. Procédé selon l'une quelconque des revendications précédentes dans lequel le temps de contact entre la membrane de microfiltration ou d'ultrafiltration et le radical hydroxyle est compris entre 0,5 et 24 h.

28. Procédé selon la revendication 27 dans lequel le temps de contact entre la membrane de microfiltration ou d'ultrafiltration et le radical hydroxyle est compris entre 2 et 4 h.

29. Procédé selon l'une quelconque des revendications précédentes dans lequel le système métal de transition/peroxyde a une concentration initiale de 0,12 % en poids de FeSO₄ à pH 2 et une concentration en peroxyde comprise entre 5.000 ppm et 9.000 ppm.

30. Procédé selon l'une quelconque des revendications précédentes dans lequel on utilise de l'hydrogénosulfate de sodium pour réguler le pH.

31. Procédé selon l'une quelconque des revendications 1 à 29 dans lequel on utilise de l'acide citrique pour réguler le pH.

32. Procédé selon l'une quelconque des revendications 1 à 29 dans lequel on régule le pH au moyen d'acide sulfurique tamponné avec du NaOH.
